# EUROPEAN PATENT APPLICATION

(11) **EP 1 233 560 A1**
(43) Date of publication of application: **21.08.2002**
(21) Application number: 01972645.4
(22) Date of filing: 02.10.2001
(51) Int. Cl.: H04J 13/04

(54) **PATH SELECTION DEVICE AND PATH SELECTION METHOD**

(30) Priority: 04.10.2000 JP 2000304907
(71) Applicant: MATSUSHITA ELECTRIC INDUSTRIAL CO., LTD., Kadoma-shi, Osaka 571-8501 (JP)
(72) Inventor: IOCHI, Hitoshi, Yokosuka-shi, Kanagawa 239-0831 (JP); MIYA, Kazuyuki, Asao-ku, Kawasaki-shi, Kanagawa 215-0021 (JP)
(74) Representative: Grünecker, Kinkeldey, Stockmair & Schwanhäusser Anwaltssozietät
(86) International application number: JP0108664
(87) International publication number: WO02030024

(57) **Abstract**

Delay profile generation sections 101 and 102 generate delay profiles from signals received from their respective antennas, delay profile addition section 104 adds up the delay profiles to generate an antenna combined delay profile. Path selection section 105 selects an arbitrary number of path phases from the delay profiles input through switching section 103 when a Doppler frequency is lower than a predetermined value and selects an arbitrary number of path phases of their respective antennas from the antenna combined delay profile when the Doppler frequency is higher than the predetermined value.

## Description

### Technical Field

The present invention relates to an apparatus and method for path selection applicable to a mobile station apparatus such as a cellular phone, an information communication terminal apparatus provided with cellular phone functions and computer functions and a base station apparatus carrying out a radio communication with the mobile station apparatus in a mobile communication system based on a spread spectrum system, which generates delay profiles suitable for a Doppler frequency and selects a path through which a signal is transmitted.

### Background Art

This conventional type of path selection apparatus and method is described in the Unexamined Japanese Patent Publication No.HEI 10-51356.

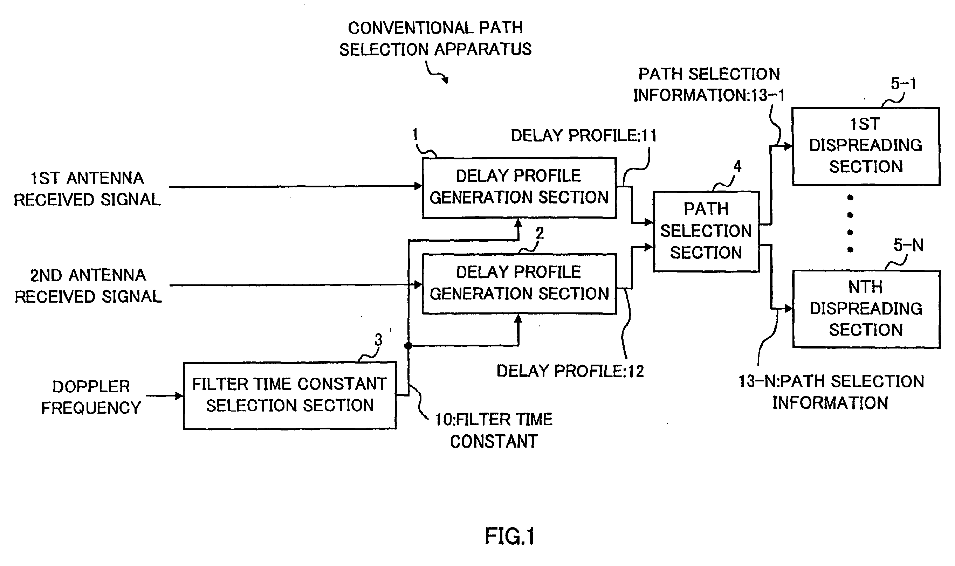

The path selection apparatus according to the method described in this publication will be explained with reference to FIG.1. FIG.1 is a block diagram showing a configuration of a conventional path selection apparatus. However, suppose the path selection apparatus shown in FIG.1 is mounted on a base station apparatus.

This path selection apparatus is provided with a diversity antenna, which is not shown, delay profile generation sections 1 and 2 provided for the respective antennas, filter time constant selection section 3, path selection section 4 and 1st to Nth despreading sections 5-1 to 5-N.

In this configuration, filter time constant selection section 3 selects filter time constant 10 suitable for the level (high/low) of the Doppler frequency and outputs this to delay profile generation sections 1 and 2.

However, when the Doppler frequency exceeds a predetermined value as a mobile station apparatus on the other end of communication moves at high speed, filter time constant 10 is decreased. On the contrary, when the Doppler frequency is lower than the predetermined value, filter time constant 10 is increased.

Delay profile generation sections 1 and 2 carry out a power accumulation and coherent accumulation on the signals received from the respective antennas according to filter time constant 10 to form peak waveforms, generate delay profiles 11 and 12 with these peak waveforms strung on the time scale and output these delay profiles to path selection section 4.

However, a power accumulation count and coherent accumulation count decrease when filter time constant 10 is small and increase when filter time constant 10 is large.

Path selection section 4 selects a path phase of a signal with a higher peak out of the path signals received from the respective antennas and outputs path selection information 13-1 to 13-N indicating this path phase to 1st to Nth despreading sections 5-1 to 5-N.

1st to Nth despreading sections 5-1 to 5-N perform despreading processing on signals with the path phases received from the antennas indicated by path selection information 13-1 to 13-N.

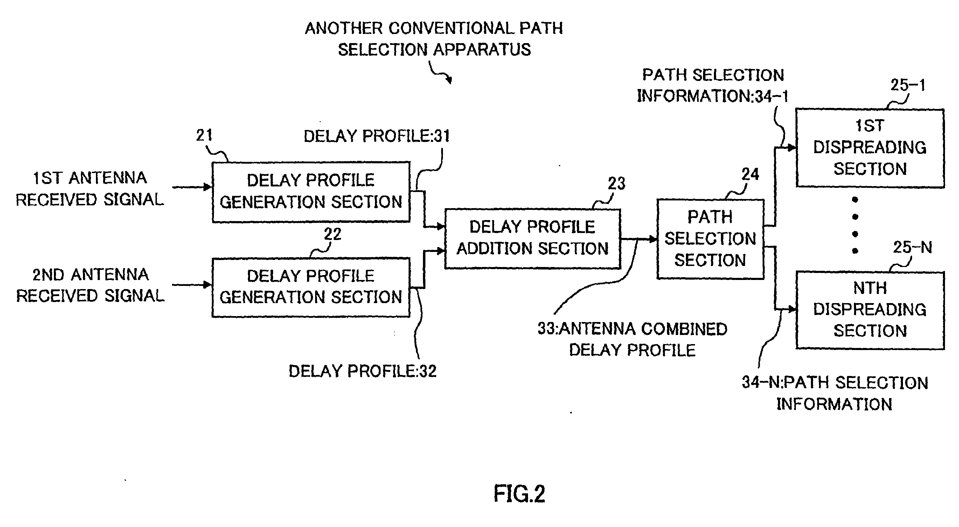

Another conventional example is a path selection apparatus shown in FIG.2. FIG.2 is a block diagram showing a configuration of another conventional path selection apparatus. However, suppose the path selection apparatus shown in FIG.2 is mounted on a base station apparatus.

This path selection apparatus uses a method of adding delay profiles of a plurality of antennas and selecting paths using the added delay profiles (hereinafter referred to as "antenna combined delay profiles"). This method is described in the RCS99-67 "Proposal of CDMA Path Search System Using Antenna Combined Delay Profiles".

The path selection apparatus is provided with a diversity antenna (not shown), delay profile generation sections 21 and 22 provided for the respective antennas, delay profile addition section 23, path selection section 24 and 1st to Nth despreading sections 25-1 to 25-N.

In such a configuration, delay profile generation sections 21 and 22 carry out a power accumulation and coherent accumulation on the signals received from the respective antennas to form peak waveforms, generate delay profiles 31 and 32 with these peak waveforms strung on the time scale and output these delay profiles to delay profile addition section 23.

Delay profile addition section 23 adds up delay profiles 31 and 32 to form antenna combined delay profile 33 and outputs this antenna combined delay profile 33 to path selection section 24.

Path selection section 24 selects a path phase of a signal with a higher peak out of the path signals received from the respective antennas and outputs path selection information 34-1 to 34-N indicating this path phase to 1st to Nth despreading sections 25-1 to 25-N based on antenna combined delay profile 33.

1st to Nth despreading sections 25-1 to 25-N perform despreading processing on signals with the path phases received from the antennas indicated by path selection information 34-1 to 34-N.

However, in the case of the conventional apparatus, for example, the path selection apparatus shown in FIG. 1, when a Doppler frequency is high because of high-speed movement, if filter time constant 10 is decreased, delay profile generation sections 1 and 2 for the respective antennas cannot perform sufficient averaging, failing to obtain delay profiles with noise sufficiently suppressed. On the other hand, if filter time constant 10 is increased, delay profile generation sections 1 and 2 cannot follow path changes caused by high-speed movement of the mobile station apparatus and cannot obtain delay profiles with sufficient peaks. For these reasons, the conventional apparatus has a problem of being unable to select paths correctly.

On the other hand, since the path selection apparatus shown in FIG.2 always uses antenna combined delay profile 33, when a Doppler frequency is high because of high-speed movement, the path selection apparatus can obtain an averaging effect resulting from combining the delay profiles even with a short averaging time, thereby obtain delay profiles with noise sufficiently suppressed and perform path selection based thereon. However, when the Doppler frequency is 0 or low, time variation of fading is small and a fading correlation between the antennas is low, and therefore there is a high possibility that delay profiles for the respective antennas will become independent. In this case, there is a problem that a correct path can be selected by increasing the time of averaging delay profiles for the respective antennas and selecting a path from the delay profiles for the respective antennas without adding up the delay profiles, rather than selecting a path from antenna combined delay profile 33.

### Disclosure of Invention

It is an object of the present invention to provide a path selection apparatus and path selection method capable of selecting a correct path using a delay profile suitable for a Doppler frequency.

A subject of the present invention is to select a correct path using a delay profile suitable for a Doppler frequency by generating delay profiles from signals received from the respective antennas, adding up the delay profiles to generate an antenna combined delay profile, selecting an arbitrary number of path phases from the delay profiles when the Doppler frequency is lower than a predetermined value or selecting an arbitrary number of path phases of the respective antennas from the antenna combined delay profile when the Doppler frequency is higher than the predetermined value.

### Brief Description of Drawings

FIG.1 is a block diagram showing a configuration of a conventional path selection apparatus;
FIG.2 is a block diagram showing a configuration of another conventional path selection apparatus;
FIG.3 is a block diagram showing a configuration of a path selection apparatus according to Embodiment 1 of the present invention;
FIG.4A shows a relationship between delay profile addition section output and a path phase to illustrate the path selection apparatus according to Embodiment 1 of the present invention;
FIG.4B shows a relationship between delay profile addition section output and a path phase to illustrate the path selection apparatus according to Embodiment 1 of the present invention;
FIG.4C shows a relationship between delay profile addition section output and a path phase to illustrate the path selection apparatus according to Embodiment 1 of the present invention;
FIG.5 is a block diagram showing a configuration of a path selection apparatus according to Embodiment 2 of the present invention;
FIG.6A shows a relationship between delay profile addition section output and a path phase to illustrate the path selection apparatus according to Embodiment 2 of the present invention;
FIG.6B shows a relationship between delay profile addition section output and a path phase to illustrate the path selection apparatus according to Embodiment 2 of the present invention;
FIG.6C shows a relationship between delay profile addition section output and a path phase to illustrate the path selection apparatus according to Embodiment 2 of the present invention;
FIG.7A shows a relationship between delay profile addition section output and a path phase to illustrate the path selection apparatus according to Embodiment 3 of the present invention;
FIG.7B shows a relationship between delay profile addition section output and a path phase to illustrate the path selection apparatus according to Embodiment 3 of the present invention;
FIG.7C shows a relationship between delay profile addition section output and a path phase to illustrate the path selection apparatus according to Embodiment 3 of the present invention; and
FIG.8 is a block diagram showing a configuration of a path selection apparatus according to Embodiment 4 of the present invention.

### Best Mode for Carrying out the Invention

With reference now to the attached drawings, embodiments of the present invention will be explained in detail below.

### (Embodiment 1)

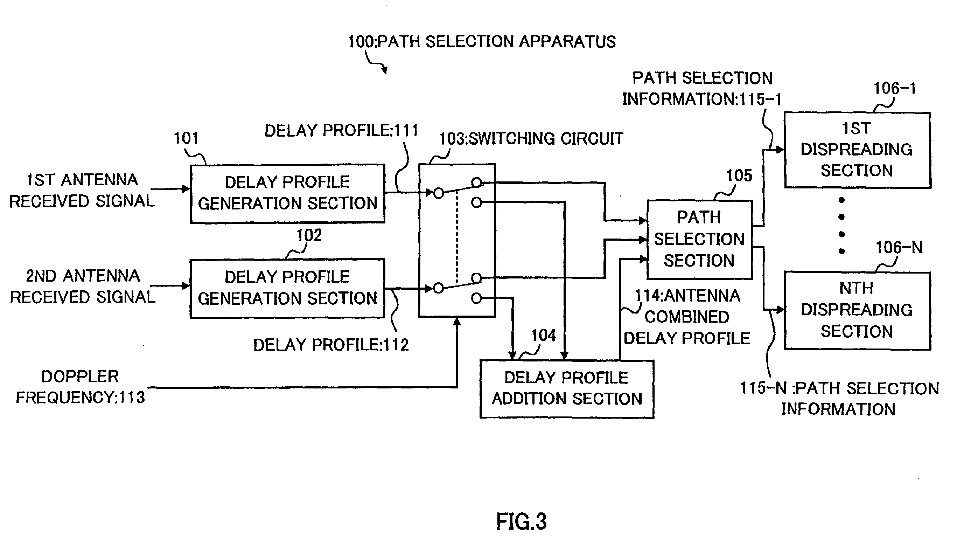

FIG.3 is a block diagram showing a configuration of a path selection apparatus according to Embodiment 1 of the present invention. Here, suppose path selection apparatus 100 shown in FIG.3 is mounted on a base station apparatus.

This path selection apparatus 100 is provided with a diversity antenna (not shown) , delay profile generation sections 101 and 102 provided for the respective antennas, switching circuit 103, delay profile addition section 104, path selection section 105 and 1st to Nth despreading sections 106-1 to 106-N.

In such a configuration, delay profile generation sections 101 and 102 carry out a power accumulation and coherent accumulation on the received signals of the respective antennas to form peak waveforms, generate delay profiles 111 and 112 with these peak waveforms strung on the time scale and output these delay profiles to switching section 103.

Switching section 103 outputs delay profiles 111 and 112 to delay profile addition section 104 when Doppler frequency 113 is higher than a predetermined value and outputs delay profiles 111 and 112 to path selection section 105 when Doppler frequency 113 is lower than the predetermined value.

Delay profile addition section 104 adds up delay profiles 111 and 112 to form antenna combined delay profile 114 and outputs this antenna combined delay profile 114 to path selection section 105.

When Doppler frequency 113 is lower than the predetermined value, delay profiles 111 and 112 generated by delay profile generation sections 101 and 102 are input to path selection section 105 through switching circuit 103 as they are, and therefore path selection section 105 selects, for example, a path phase of a signal with a higher peak of the path signals received by the respective antennas based on delay profiles 111 and 112 and outputs path selection information 115-1 to 115-N indicating this path phase to 1st to Nth despreading sections 106-1 to 106-N.

On the other hand, when Doppler frequency 113 is higher than the predetermined value, antenna combined delay profile 114 from delay profile addition section 104 is input to path selection section 105, and therefore path selection section 105 selects, for example, a path phase of a signal with a higher peak of the path signals received by the respective antennas based on this antenna combined delay profile 114 and outputs path selection information 115-1 to 115-N indicating this path phase to 1st to Nth despreading sections 106-1 to 106-N.

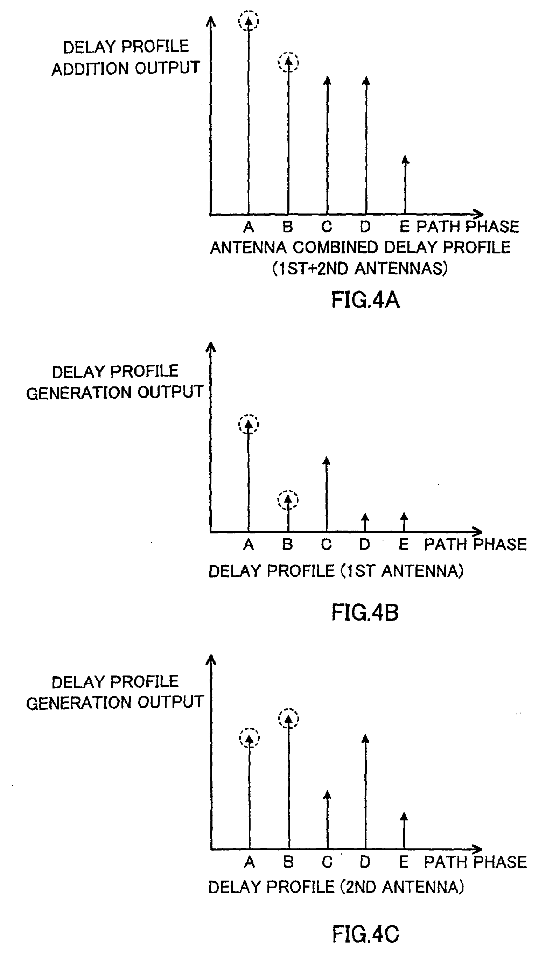

An example of operation of path selection section 105 when a path phase is selected from antenna combined delay profile 114 will be explained with reference to FIG.4A to FIG.4C in further detail. Here, suppose the number of antennas M = 2 and the number of fingers corresponding to the path signals received from the respective antennas N = 4.

First, in FIG.4A, N/M (= 2) path phases A and B are selected in descending order of the peak heights from antenna combined delay profile 114. Then, as shown in FIG.4B and 4C, the selected path phases A and B are selected by both the first antenna and second antenna. Then, the path phases A and B of the selected first and second antennas are assigned to corresponding 1st to Nth despreading sections 106-1 to 106-N.

1st to Nth despreading sections 106-1 to 106-N perform despreading processing on the signals with the path phases at the antennas indicated by path selection information 115-1 to 115-N.

Thus, according to path selection apparatus 100 of Embodiment 1, delay profile generation sections 101 and 102 generate delay profiles from the signals received from the respective antennas, delay profile addition section 104 adds up the delay profiles to generate an antenna combined delay profile. When the Doppler frequency is lower than a predetermined value, path selection section 105 selects, for example, an arbitrary number of path phases in descending order of peak heights from the delay profiles input through switching circuit 103, and when the Doppler frequency is higher than the predetermined value, path selection section 105 selects, for example, an arbitrary number of path phases of the respective antennas in descending order of peak heights from the antenna combined delay profile.

When the Doppler frequency is high due to high-speed movement, this makes it possible to obtain an averaging effect even in a short averaging time by combining the delay profiles and obtain a delay profile with noise sufficiently suppressed and select an appropriate path based thereon. On the other hand, when the Doppler frequency is 0 or low, a time variation of fading is small or a fading correlation between the antennas is low and there is a high possibility that delay profiles of the respective antennas will become independent, and therefore selecting a path from each delay profile allows more correct selection than selecting a path from the antenna combined delay profile.

This embodiment has been explained using a case where peaks of delay profiles are selected in descending order of peak heights as an example, but the present invention can also be implemented likewise even if parts other than the delay profile peaks are selected as paths or any method other than the above-described selection method is applied.

### (Embodiment 2)

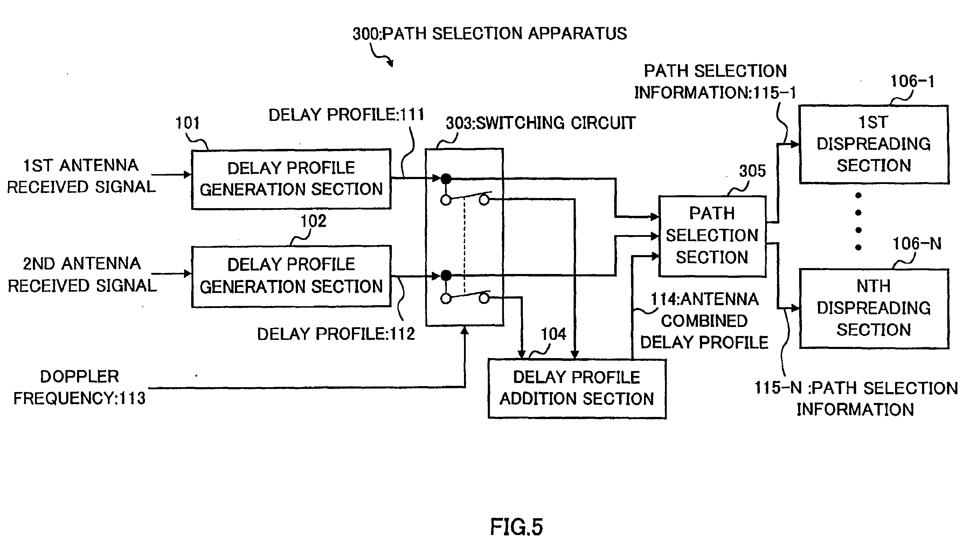

FIG.5 is a block diagram showing a configuration of a path selection apparatus according to Embodiment 2 of the present invention. However, the parts in Embodiment 2 shown in this FIG.5 that correspond to those in Embodiment 1 in FIG.3 are assigned the same reference numerals and explanations thereof will be omitted.

Path selection apparatus 300 shown in FIG.5 differs from path selection apparatus 100 shown in FIG.3 in the functions of switching circuit 303 and path selection apparatus 305.

When Doppler frequency 113 is higher than a predetermined value, switching circuit 303 outputs delay profiles 111 and 112 to path selection section 305 and delay profile addition section 104, and when Doppler frequency 113 is lower than the predetermined value, switching circuit 303 outputs to path selection section 305.

When Doppler frequency 113 is lower than the predetermined value, delay profiles 111 and 112 generated by delay profile generation sections 101 and 102 are input through switching circuit 103 as they are, and therefore path selection circuit 305 selects, for example, a path phase of a signal with a higher peak of the path signals received from the respective antennas based on this delay profiles 111 and 112 and outputs path selection information 115-1 to 115-N indicating this path phase to 1st to Nth despreading sections 106-1 to 106-N.

On the other hand, when Doppler frequency 113 is higher than the predetermined value, path selection circuit 305 selects, for example, an arbitrary number of path candidate phases in descending order of peak heights based on antenna combined delay profile 114 and then selects a path phase whose delay profile value is higher than a threshold for path selection according to the path candidate phases in delay profiles 111 and 112 and outputs path selection information 115-1 to 115-N indicating this path phase to 1st to Nth despreading sections 106-1 to 106-N.

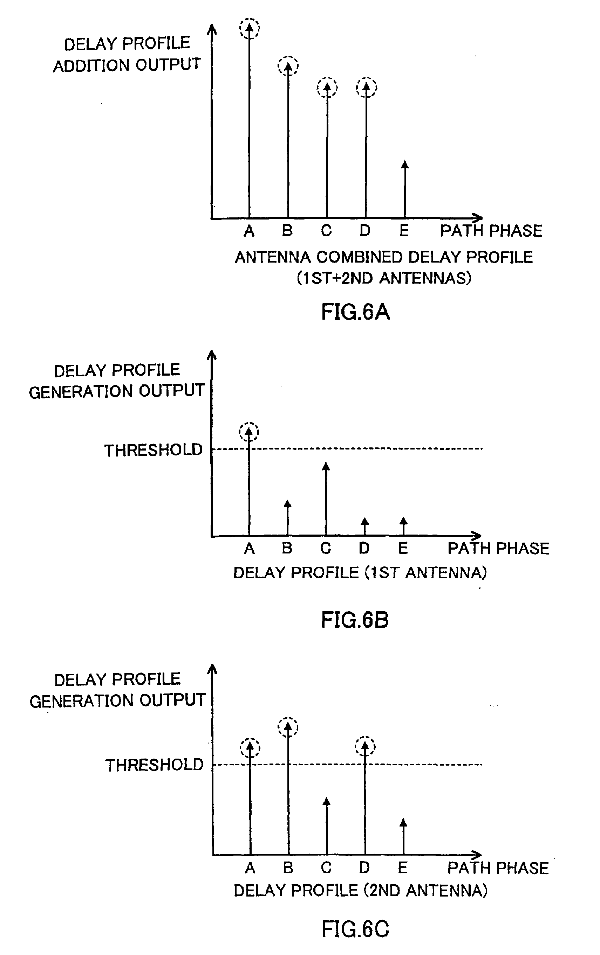

An example of operation of path selection section 305 when a path phase is selected from these path candidate phases will be explained with reference to FIG. 6A to FIG. 6C in further detail. Here, suppose the number of antennas M = 2 and the number of fingers N = 4.

First, in FIG.6A, N = 4 path candidate phases A, B, C and D are selected from antenna combined delay profile 114 in descending order of peak heights. Then, as shown in FIG.6B, path phase A higher than a threshold value is selected from first delay profile 111 corresponding to path candidate phases A, B, C and D and as shown in FIG.6C, path phases A, B and D higher than the threshold value are selected from second delay profile 112 corresponding to path candidate phases A, B, C and D.

Then, selected path phase A and path phases A, B and D from their respective first and second antennas are assigned to corresponding 1st to Nth despreading sections 106-1 to 106-N.

Thus, according to path selection apparatus 300 of Embodiment 2, delay profile generation sections 101 and 102 generate delay profiles from the signals received by their respective antennas and delay profile addition section 104 adds up the delay profiles to generate an antenna combined delay profile. When the Doppler frequency is lower than the predetermined value, path selection section 305 selects, for example, an arbitrary number of path phases in descending order of peak heights from the delay profiles input through switching circuit 303, and when the Doppler frequency is higher than the predetermined value, path selection section 305 selects, for example, an arbitrary number of path candidate phases in descending order of peak heights from the antenna combined delay profiles and then selects path phases whose delay profile value is higher than a threshold for path selection corresponding to the path candidate phases in the respective delay profiles output from switching circuit 303.

When the Doppler frequency is high due to high-speed movement, this makes it possible to determine path candidate phases based on the antenna combined delay profile and select a path from a delay profile for each antenna based on this path candidate phase.

This embodiment has been explained using the case where peaks of a delay profile are selected in descending order of peak heights, but the present invention can also be implemented likewise even if parts other than the delay profile peaks are selected as paths or any method other than the above-described selection method is applied.

### (Embodiment 3)

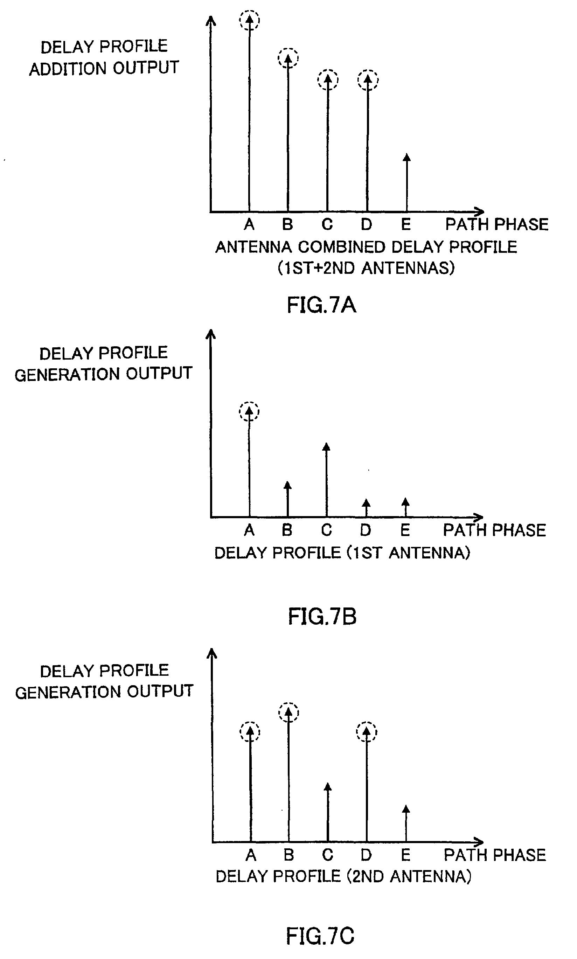

FIG.7 shows a relationship between delay profile addition section output and a path phase to illustrate the path selection apparatus according to Embodiment 3 of the present invention.

The configuration of the path selection apparatus of this Embodiment 3 is the same as path selection apparatus 300 of Embodiment 2 shown in FIG.5 except the functions of path selection section 305.

That is, when Doppler frequency 113 is higher than a predetermined value, path selection section 305 in Embodiment 3 selects, for example, an arbitrary number of path candidate phases in descending order of peak heights based on antenna combined delay profile 114 and then selects, for example, an arbitrary number of path phases corresponding to the path candidate phases from both delay profiles 111 and 112, for example, in descending order of heights and outputs path selection information 115-1 to 115-N indicating these path phases to 1st to Nth despreading sections 106-1 to 106-N.

An example of this operation will be explained in further detail with reference to FIG.7A to FIG.7C. Here, suppose the number of antennas M = 2 and the number of fingers N = 4.

First, in FIG.7A, N = 4 path candidate phases A, B, C and D are selected in descending order of peak heights from antenna combined delay profile 114. Then, as shown in FIG.7B and FIG.7C, path phases corresponding to path candidate phases A, B, C and D are selected in descending order (A, A, B, D) of heights from both first and second delay profiles 111 and 112.

Thus, when the Doppler frequency is higher than a predetermined value, the path selection apparatus of Embodiment 3 selects, for example, an arbitrary number of path candidate phases in descending order of peak heights based on the antenna combined delay profile and then selects an arbitrary number of path phases corresponding to the path candidate phases from both delay profiles.

Thus, when the Doppler frequency is high due to high-speed movement, it is possible to determine path candidate phases based on an antenna combined delay profile and select paths in descending order of peak heights from all delay profiles of the respective antennas based on these path candidate phases.

This embodiment has been explained using the case where delay profile peaks are selected in order of their heights as an example, but the present invention can be implemented likewise even if parts other than the delay profile peaks are selected as paths or a method other than the above-described selection method is applied.

### (Embodiment 4)

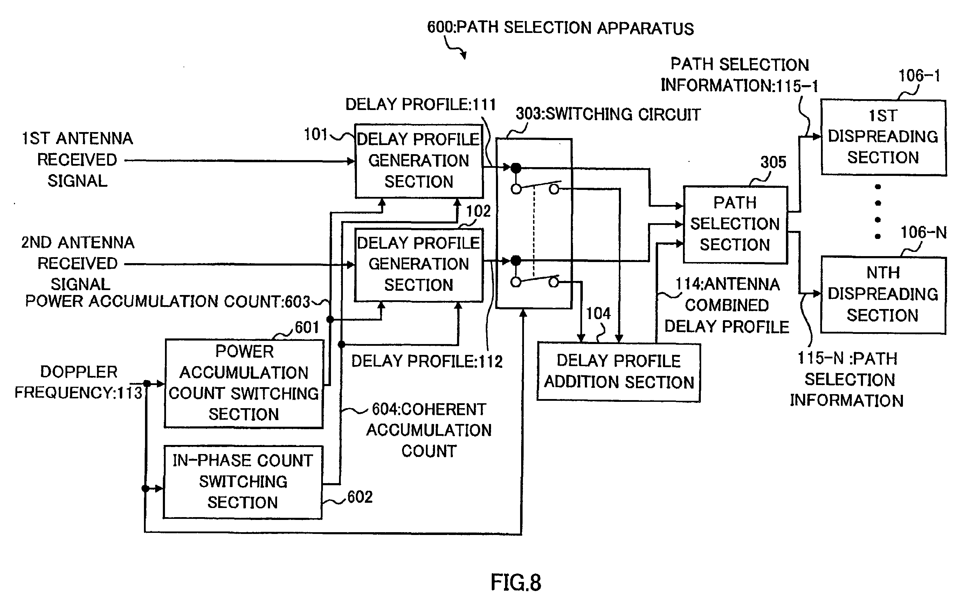

FIG.8 is a block diagram showing a configuration of a path selection apparatus according to Embodiment 4 of the present invention. However, the parts in Embodiment 4 shown in FIG.8 that correspond to those in Embodiment 2 in FIG.5 are assigned the same reference numerals and explanations thereof will be omitted.

Path selection apparatus 600 shown in FIG.8 is different from path selection apparatus 300 shown in FIG.5 in that it is provided with power accumulation count switching section 601 and coherent accumulation count switching section 602.

Power accumulation count switching section 601 sets power accumulation count 603 used by delay profile generation sections 101 and 102 to create delay profiles 111 and 112 according to Doppler frequency 113.

Coherent accumulation count switching section 602 sets coherent accumulation count 604 used by delay profile generation sections 101 and 102 to create delay profiles 111 and 112 according to Doppler frequency 113.

However, it is also possible to make a signal addition or averaging time during creation of a delay profile variable according to the Doppler frequency or make the number of signal addition or averaging samples variable according to the Doppler frequency without being restricted by the power accumulation count or coherent accumulation count.

Thus, when Doppler frequency 113 is higher than a predetermined value because of high-speed movement of a mobile station apparatus on the other end of communication, path selection apparatus 600 of Embodiment 4 reduces power accumulation count 603 or coherent accumulation count 604 and when Doppler frequency 113 is lower, path selection apparatus 600 increases power accumulation count 603 or coherent accumulation count 604, and can thereby create delay profiles 111 and 112 using power accumulation count 603 or coherent accumulation count 604 suited to Doppler frequency 113. This allows more appropriate path selection.

Embodiment 4 has added power accumulation count switching section 601 and coherent accumulation count switching section 602 to the configuration of Embodiment 2, but adding power accumulation count switching section 601 and coherent accumulation count switching section 602 to Embodiment 1 or Embodiment 3 can also obtain similar effects as those of Embodiment 4.

The path selection apparatus of the present invention adopts a configuration including a generation section that generates delay profiles from signals received by their respective antennas, an addition section that adds up the delay profiles to generate an antenna combined delay profile and a selection section that selects an arbitrary number of path phases from the delay profiles when the Doppler frequency is lower than a predetermined value or selects an arbitrary number of path phases of the respective antennas from the antenna combined delay profile when the Doppler frequency is higher than the predetermined value.

According to this configuration, when the Doppler frequency is high because of high-speed movement, it is possible to obtain an averaging effect by combining delay profiles even in a short averaging time, obtain a delay profile with noise sufficiently suppressed and select paths appropriately based thereon. On the other hand, when the Doppler frequency is 0 or low, because a time variation of fading is small and a fading correlation between antennas is low, there is a high possibility that delay profiles for their respective antennas become independent making it possible to carry out a more correct selection than carrying out a path selection from the antenna combined delay profile.

The path selection apparatus of the present invention adopts a configuration including a generation section that generates delay profiles from signals received by their respective antennas, an addition section that adds up the delay profiles to generate an antenna combined delay profile and a selection section that selects an arbitrary number of path phases from the delay profiles when a Doppler frequency is lower than a predetermined value or selects an arbitrary number of path candidate phases from the antenna combined delay profiles when the Doppler frequency is higher than the predetermined value and then selects path phases whose delay profile values are higher than a predetermined value of path selection corresponding to the path candidate phases of the respective delay profiles.

According to this configuration, when the Doppler frequency is high because of high-speed movement, it is possible to determine path candidate phases based on the antenna combined delay profile and select paths from delay profiles for the respective antennas based on these path candidate phases.

The path selection apparatus of the present invention adopts a configuration including a generation section that generates delay profiles from signals received by their respective antennas, an addition section that adds up the delay profiles to generate an antenna combined delay profile and a selection section that selects an arbitrary number of path phases from the delay profiles when a Doppler frequency is lower than a predetermined value or selects an arbitrary number of path candidate phases from the antenna combined delay profile when the Doppler frequency is higher than the predetermined value and then selects an arbitrary number of path phases corresponding to the path candidate phases from both delay profiles.

According to this configuration, when the Doppler frequency is high because of high-speed movement, it is possible to determine path candidate phases based on the antenna combined delay profile and select paths from all delay profiles of the respective antennas based on these path candidate phases.

The path selection apparatus of the present invention in the above-described configuration includes a switching section that makes a signal addition or averaging time when the generation section creates delay profiles variable according to the Doppler frequency.

According to this configuration, it is possible to generate delay profiles suited to the Doppler frequency by shortening a signal addition or averaging time when the Doppler frequency is higher than a predetermined value because of high-speed movement of the mobile station apparatus on the other end of communication, or increasing a signal addition or averaging time when the Doppler frequency is lower and thereby make a more appropriate path selection.

The path selection apparatus of the present invention in the above-described configuration includes a switching section that makes the number of signal addition or averaging samples when the generation section creates delay profiles variable according to the Doppler frequency.

According to this configuration, it is possible to generate delay profiles suited to the Doppler frequency by reducing the number of signal addition or averaging samples when the Doppler frequency is higher than a predetermined value because of high-speed movement of the mobile station apparatus on the other end of communication or increasing the number of signal addition or averaging samples when the Doppler frequency is lower than the predetermined value and thereby make a more appropriate path selection.

In the path selection apparatus of the present invention in the above-described configuration, the switching section makes the power accumulation count variable according to the Doppler frequency.

According to this configuration, it is possible to generate delay profiles suited to the Doppler frequency by reducing the power accumulation count when the Doppler frequency is higher than a predetermined value because of high-speed movement of the mobile station apparatus on the other end of communication or increasing the power accumulation count when the Doppler frequency is lower than the predetermined value and thereby make a more appropriate path selection.

In the path selection apparatus of the present invention in the above-described configuration, the switching section makes the coherent accumulation count variable according to the Doppler frequency.

According to this configuration, it is possible to generate delay profiles with an coherent accumulation count suited to the Doppler frequency by decreasing the coherent accumulation count when the Doppler frequency is higher than a predetermined value because of high-speed movement of the mobile station apparatus on the other end of communication or increasing the coherent accumulation count when the Doppler frequency is lower than the predetermined value and thereby make a more appropriate path selection.

The mobile station apparatus of the present invention adopts a configuration including a path selection apparatus in the same configuration as that of any one of the above-described path selection apparatuses. The mobile station apparatus in this configuration can achieve similar operating effects as those of any one of the above-described path selection apparatuses.

The base station apparatus of the present invention adopts a configuration including a path selection apparatus in the same configuration as that of any one of the above-described path selection apparatuses. The base station apparatus in this configuration can achieve similar operating effects as those of any one of the above-described path selection apparatuses.

The path selection method of the present invention generates delay profiles from signals received by their respective antennas, adds up the delay profiles to generate an antenna combined delay profile and selects an arbitrary number of path phases from the delay profiles when a Doppler frequency is lower than a predetermined value or selects an arbitrary number of path phases of the respective antennas from the antenna combined delay profile when the Doppler frequency is higher than the predetermined value.

According to this method, when the Doppler frequency is high because of high-speed movement, it is possible to obtain an averaging effect by combining delay profiles even in a short averaging time, obtain a delay profile with noise sufficiently suppressed and make an appropriate path selection based thereon. On the other hand, when the Doppler frequency is 0 or low, because a time variation of fading is small and a fading correlation between the antennas is low, there is a high possibility that delay profiles for their respective antennas become independent, making it possible to carry out a more correct selection by carrying out a path selection from the antenna combined delay profile.

The path selection method of the present invention generates delay profiles from signals received by their respective antennas, adds up the delay profiles to generate an antenna combined delay profile and selects an arbitrary number of path phases from the delay profiles when a Doppler frequency is lower than a predetermined value or selects an arbitrary number of path candidate phases from the antenna combined delay profile when the Doppler frequency is higher than the predetermined value and then selects path phases corresponding to the path candidate phases of the respective delay profiles.

According to this method, when the Doppler frequency is high because of high-speed movement, it is possible to determine path candidate phases based on the antenna combined delay profile and select paths from the delay profiles of the respective antennas based on these path candidates phases.

The path selection method of the present invention generates delay profiles from signals received by their respective antennas, adds up the delay profiles to generate an antenna combined delay profile and selects an arbitrary number of path phases from the delay profiles when a Doppler frequency is lower than a predetermined value or selects an arbitrary number of path candidate phases from the antenna combined delay profile when the Doppler frequency is higher than the predetermined value and then selects an arbitrary number of path phases corresponding to the path candidate phases from both delay profiles.

According to this method, when the Doppler frequency is high because of high-speed movement, it is possible to determine path candidate phases based on the antenna combined delay profile and select paths from all delay profiles of the respective antennas based on these path candidate phases.

As described above, the present invention makes it possible to select correct paths using delay profiles suited to a Doppler frequency.

This application is based on the Japanese Patent Application No.2000-304907 filed on October 4, 2000, entire content of which is expressly incorporated by reference herein.

### Industrial Applicability

The present invention is applicable to a mobile station apparatus such as a cellular phone, an information communication terminal apparatus provided with cellular phone functions and computer functions and a base station apparatus carrying out a radio communication with the mobile station apparatus in a mobile communication system based on a spread spectrum system.

## Claims

1. A path selection apparatus comprising:
generating means for generating delay profiles from signals received by their respective antennas;
adding means for adding up said delay profiles to generate an antenna combined delay profile; and
selecting means for selecting an arbitrary number of path phases from said delay profile when a Doppler frequency is lower than a predetermined value or selecting an arbitrary number of path phases from said antenna combined delay profile when said Doppler frequency is higher than said predetermined value.

2. A path selection apparatus comprising:
generating means for generating delay profiles from signals received by their respective antennas;
adding means for adding up said delay profiles to generate an antenna combined delay profile; and
selecting means for selecting an arbitrary number of path phases from said delay profiles when a Doppler frequency is lower than a predetermined value or selecting an arbitrary number of path candidate phases from said antenna combined delay profile when said Doppler frequency is higher than said predetermined value and then selecting path phases whose delay profile values are higher than a predetermined value of path selection corresponding to said path candidate phases of said respective delay profiles.

3. A path selection apparatus comprising:
generating means for generating delay profiles from signals received by their respective antennas;
adding means for adding up said delay profiles to generate an antenna combined delay profile; and selecting means for selecting an arbitrary number of path phases from said delay profiles when a Doppler frequency is lower than a predetermined value or selecting an arbitrary number of path candidate phases from said antenna combined delay profile when said Doppler frequency is higher than said predetermined value and then selecting an arbitrary number of path phases corresponding to said path candidate phases from both of said delay profiles.

4. The path selection apparatus according to claim 1, further comprising switching means for making a signal addition or averaging time when the generating means creates delay profiles variable according to the Doppler frequency.

5. The path selection apparatus according to claim 1, further comprising switching means for making the number of signal addition or averaging samples when the generating means creates delay profiles variable according to the Doppler frequency.

6. The path selection apparatus according to claim 5, wherein the switching means makes a power accumulation count variable according to the Doppler frequency.

7. The path selection apparatus according to claim 5, wherein the switching means makes an coherent accumulation count variable according to the Doppler frequency.

8. A mobile station apparatus provided with a path selection apparatus, said path selection apparatus comprising:
generating means for generating delay profiles from signals received by their respective antennas;
adding means for adding up said delay profiles to generate an antenna combined delay profile; and
selecting means for selecting an arbitrary number of path phases from said delay profiles when a Doppler frequency is lower than a predetermined value or selecting an arbitrary number of path phases from said antenna combined delay profile when said Doppler frequency is higher than said predetermined value.

9. A base station apparatus provided with a path selection apparatus, said path selection apparatus comprising:
generating means for generating delay profiles from signals received by their respective antennas;
adding means for adding up said delay profiles to generate an antenna combined delay profile; and
selecting means for selecting an arbitrary number of path phases from said delay profiles when a Doppler frequency is lower than a predetermined value or selecting an arbitrary number of path phases from said antenna combined delay profile when said Doppler frequency is higher than said predetermined value.

10. A path selection method comprising the steps of:
generating delay profiles from signals received by their respective antennas;
adding up the delay profiles to generate an antenna combined delay profile; and
selecting an arbitrary number of path phases from said delay profiles when a Doppler frequency is lower than a predetermined value or selecting an arbitrary number of path phases from said antenna combined delay profiles when said Doppler frequency is higher than said predetermined value.

11. A path selection method comprising the steps of:
generating delay profiles from signals received by their respective antennas;
adding up the delay profiles to generate an antenna combined delay profile; and
selecting an arbitrary number of path phases from said delay profiles when a Doppler frequency is lower than a predetermined value or selecting an arbitrary number of path candidate phases from said antenna combined delay profile when said Doppler frequency is higher than said predetermined value and then selecting path phases whose delay profile values are higher than a predetermined value of path selection corresponding to said path candidate phases of said respective delay profiles.

12. A path selection method comprising the steps of:
generating delay profiles from signals received by their respective antennas;
adding up the delay profiles to generate an antenna combined delay profile; and
selecting an arbitrary number of path phases from said delay profiles when a Doppler frequency is lower than a predetermined value or selecting an arbitrary number of path candidate phases from said antenna combined delay profile when said Doppler frequency is higher than said predetermined value and then selecting an arbitrary number of path phases corresponding to said path candidate phases from both of said delay profiles.
